# EUROPEAN PATENT APPLICATION

(11) **EP 4 292 882 A1**
(43) Date of publication of application: **20.12.2023**
(21) Application number: 23177346.6
(22) Date of filing: 05.06.2023
(51) Int. Cl.: B60P 7/08, B60P 3/00, B60P 7/10

(54) **A TRANSPORT SYSTEM AND A METHOD**

(30) Priority: 16.06.2022 GB 202208855
(71) Applicant: The West Retail Group Limited, Barton-upon-Humber North Lincolnshire DN18 5RL (GB)
(72) Inventor: HOLMES, Lee, Barton-upon-Humber, DN18 5RL (GB); HOLLAND, Darren, Paul, John, Winsford, CW7 3RL (GB); CARTWRIGHT, Alan, John, Winsford, CW7 3RL (GB)
(74) Representative: Haseltine Lake Kempner LLP

(57) **Abstract**

An HGV trailer (200) for transporting goods such as worktops (1), the trailer comprising: a deck (204) configured to receive an A-frame (100) for holding the goods; a securing strap (326) for securing an A-frame to the deck; and a biasing element (322) attached to the securing strap and configured to bias the securing strap away from the deck. An A-frame (100) and a method (500) are also provided.

## Description

### Technical Field

The present disclosure relates to a system and a method for transporting goods and is particularly, although not exclusively, concerned with an HGV trailer for transporting planar goods such as flat packed items or worktops.

### Background

Certain goods such as worktops (e.g. kitchen worktops) are large and heavy yet delicate and high quality components which must be transported from factory to kitchen without sustaining damage. It is therefore desirable to transport such goods in a manner that restricts (e.g. prevents) exposure to factors such as sharp objects, sudden impacts, vibration and other motions, dirt, moisture and extremes of temperature.

It is common for worktops, for example, to be made from quartz which should not be exposed simultaneously to moisture and freezing temperatures.

It may therefore be difficult to transport large numbers of worktops in an efficient manner whilst restricting exposure to the above factors, particularly during inclement weather.

Improvements are therefore desired in methods of transport, particularly of planar goods such as worktops.

### Statements of Invention

According to an aspect of the present disclosure, there is provided a vehicle (e.g., HGV trailer, lorry, aircraft) for transporting goods (e.g., worktops or other substantially planar goods), the vehicle comprising: a deck configured to receive a stillage (e.g., an A-frame) for holding goods; a securing strap for securing the stillage to the deck; and a biasing element attached to the securing strap and configured to bias the securing strap away from the deck. This aspect may form part of and/or be used in combination with any of the following aspects.

According to another aspect of the present disclosure there is provided an HGV (heavy goods vehicle) trailer for transporting goods (e.g.substantially planar goods, such as worktops flat packed furniture or panes of glass), the trailer comprising: a deck (or a flat surface or a bed) configured to receive (e.g. sized and/or shaped to receive) an A-frame for holding the goods; a securing strap (e.g. a ratchet strap) for securing an A-frame to the deck (e.g., for exerting a securing force on a crossbar or apex of the A-frame); and a biasing element (e.g. a tensioning element, elastic element and/or bungee cord) attached to the securing strap and configured to bias the securing strap away from the deck (e.g., upwards, in a secured and/or unsecured configuration).

The securing strap may be operable between a secured configuration (e.g., in which an A-frame may be secured to the deck) and an unsecured configuration (e.g., in which an A-frame may be loaded onto or removed from the deck). The biasing element may be configured to bias the securing strap away from the deck in the secured and the unsecured configurations. The biasing element may be configured to bias the securing strap away from an A-frame provided on the deck.

The biasing element may be provided above the deck. The biasing element may be attached to or provided from (e.g. indirectly) a ceiling or a roof of the deck (e.g. via a rail and/or a guide tube). The biasing element may be provided towards (e.g. marginally in from) a lateral side of the trailer.

The biasing element may be configured to bias the securing strap upwards. For example, in an unsecured configuration, the biasing element may be configured to suspend the securing strap from a roof or a ceiling of the deck. The biasing element may be configured to suspend the securing strap from two locations on the roof or ceiling of the deck, each of the two locations being towards a lateral extremity of the deck such that the securing strap may hang over a sill of the deck.

The HGV trailer may comprise a rail provided longitudinally above the deck. The biasing element may be slidably attached to the rail such that the securing strap is slidable along (e.g. relative to and/or above) the deck (e.g., by means of the attachment of the biasing element).

The biasing element may be attached to the securing strap by means of a clip. The clip may be frangible such that the clip may be configured to break at a predetermined threshold tension between the biasing element and the securing strap. The threshold tension may be less than the threshold force required to break (e.g., detach) the rails from the ceiling and/or the guide tube from the rails and/or the bungee cord from the guide tube and/or to break the structure of any of the above.

The securing strap may be freely slidable through and/or relative to and/or within the frangible clip such that the point of attachment between the securing strap and the biasing element may be movable as the securing strap is tensioned.

The trailer may comprise a continuous biasing element (e.g. a unitary or unbroken biasing element) or two biasing elements, the biasing element(s) being attached to the securing strap in two places above the deck towards either transverse or lateral side of the trailer. The biasing element(s) may thereby hold the securing strap substantially in parallel with and above the deck.

The HGV trailer may comprise a parallel pair of rails provided longitudinally (e.g., parallel with a length direction of the trailer) and/or in parallel above the deck (e.g. the rails being in parallel with the deck). The securing strap may be attached to the pair of rails by a single continuous biasing element, such that the securing strap is slidable (e.g. longitudinally relative to the trailer) along the rails. The securing strap may be attached to each rail by a biasing element (e.g., a separate biasing element), such that the securing strap is slidable longitudinally along the rails.

The HGV trailer may comprise a continuous biasing element extending from both rails, or wherein the HGV trailer may comprise two separate biasing elements, each being attached to a single rail.

The HGV trailer may comprise a guide tube. The guide tube may be provided perpendicular to the, each or both rails. The guide tube may be slidably attached to the, each or both rails. The guide tube may thereby be provided above the deck and transversely to and/or laterally to the trailer. The biasing element may provided within the guide tube and extend from substantially the ends (e.g., the ends) of the guide tube. The biasing element (e.g., each end of the biasing element) may be attached to the securing strap by a frangible clip at a different location. The biasing element may be attached to the securing strap in two places on either side of the deck (e.g., towards a lateral extremity of the deck). The guide tube may be substantially rigid such that the guide tube does not substantially deflect during tensioning and de-tensioning of the securing strap, as communicated by the biasing element.

At least one biasing element may be attached to each rail. For example, each section of rail may support at least one securing strap. The at least one securing strap may be for securing an A-frame in different locations along its apex. Each securing strap may have a separate biasing element for attachment to the or each rail. The securing straps may be independently slidable along the rails. The or each securing strap may be slidable longitudinally (relative to the trailer) out of the way of the A-frame, such that the A-frame may be removable from the deck without hindrance by the securing straps.

The securing strap may be operable between an unsecured configuration (e.g. in which the strap is freely slidable along the length of the rail) and a secured configuration (e.g., in which the securing strap is configured to secure an A-frame to the deck, by attachment to fixing points and tensioning by a ratchet mechanism). In the secured configuration, the securing strap may exert a securing force to an apex or crossbar of the deck.

The biasing element may comprise a tensioning member configured to apply a tension to the securing strap in the secured configuration. The tensioning member may comprise an elastic element, most preferably a bungee cord. The elastic element may have a modulus which is significantly less than that of the securing strap, such that the elastic element is configured to elongate in preference to the securing strap.

The biasing element may be configured to bias the securing strap towards a particular location from which the biasing element is provided. Accordingly, as the securing strap is tensioned downwards and away from the biasing location, the exact direction of biasing may vary.

In a secured configuration, the biasing element forms a discontinuity in a gradient of the securing strap. In an unsecured configuration, the biasing element may form a discontinuity in the gradient of the securing strap.

The trailer may comprise a lower deck and an upper deck, each of the two decks having a rail or a pair of rails. The trailer may comprise a neck region (e.g., over the kingpin) having a raised deck, the neck region having a rail or a pair of rails provided along the roof of the trailer.

The rails of the upper deck may be provided from a roof of the trailer. The rails of the raised deck may be collinear with the rails of the upper deck. The rails of the upper deck may extend over the neck, such that the rails of the upper deck may be configured to tension securing straps for the raised deck.

The lower deck may comprise a sill having an array of attachment points. The securing straps of the upper deck may be attachable to the attachment points of the sill of the lower deck. The upper deck may not comprise a sill having attachment points.

In a secured configuration, the biasing element may be configured to bias the securing strap away from a midline of the trailer.

The or each securing strap may be tensionable between a secured and an unsecured configuration. In the secured configuration, the securing strap may apply a securing force to an apex of the A-frame.

The trailer may comprise rails attached to a ceiling or roof of the deck-space, the rails running longitudinally along the deck on either lateral side of the ceiling.

The guide tube may be slidably attached to two rails, such that in an unsecured position, pulling a securing strap on one side of the trailer slides the guide tube longitudinally along the rail(s) and pulls the other side of the securing strap on the other side of the trailer along the rails and thus the deck. The guide tube may be freely slidable along the rail or the pair of rails. If each rail or pair of rails supports at least one guide tube and/or securing strap, the guide tubes and/or securing straps may be freely pulled along the rail(s), such that the guide tubes and/or securing straps may be pulled together to one side such that they may contact one another.

The securing strap may be actuatable between an unsecured configuration and a secured configuration in which the securing strap secures an A-frame to the deck.

In a secured configuration, the biasing element may be configured to hold the securing strap away from the sides/faces of the A-frame. In an unsecured configuration, the tensioning cord may be configured to hold the securing strap away from the A-frame.

In an unsecured configuration, the biasing element and the securing strap are longitudinally movable relative to the trailer

According to another aspect of the present disclosure, there is provided a stillage for holding and/or transporting goods, the stillage comprising a receiving portion for receiving goods; an uppermost structural portion; and a weather cover for covering goods received by the receiving portion, the weather cover being provided over the uppermost structural portion. The stillage may thereby be secured on an HGV trailer using a securing strap which engages the uppermost structural portion through the weather cover. The present aspect may form part of and/or be used in conjunction with any of the following aspects.

According to another aspect of the present disclosure, there is provided an A-frame or stillage for transporting goods (e.g. planar goods such as flat packed goods, glass panels and worktop) on an HGV trailer or other vehicle, comprising: a receiving portion for receiving the goods; an apex or a crossbar or an uppermost structural portion; and a weather cover for covering the goods received by the receiving portion, wherein the weather cover is provided over the apex or crossbar or uppermost structural portion of the A-frame, such that in a secured configuration on a trailer, the A-frame is configured to be secured over the weather cover (e.g., the A-frame is configured such that securing straps of the HGV trailer pass over the weather cover and exert their securing force through the weather cover onto the apex or crossbar).

The weather cover may be made from a waterproof and/or windproof material which substantially covers the received goods from the weather.

The A-frame may comprise an upstanding portion having a triangular (e.g. isosceles) prismatic geometry. The A-frame may comprise a bed for receiving the goods, the bed comprising a series of laterally extending support struts and longitudinally extending support struts, the laterally extending support struts being located above (e.g., superior to) the longitudinally extending support strut such that the laterally extending support struts engage (e.g., bear the weight of) the goods.

The weather cover may comprise a securing strap for securing the weather cover in a closed position. In the closed position, the securing strap may be secured to a longitudinally extending support strut.

The weather cover may comprise a securing strap (e.g., two securing straps) on either major face for securing the weather cover in an open position. In an open position, each securing strap is secured to a securing strap provided on the opposing major face, such that the weather cover is substantially reduced in volume and/or size such that the receiving portion is readily accessible and/or such that the receiving portion may not be protected from the weather.

The A-frame may comprise an upstanding portion having an open structure, the goods being securable to the A-frame using a securing strap looped through the open structure. The upstanding portion may comprise a series of shelves.

The A-frame may comprise a strap-engaging portion (e.g. a strip) for being engaged by a securing strap when secured on a trailer. The strap-engaging portion may be provided over the weather cover (e.g. along the length of the apex or crossbar), such that the strap-engaging portion may communicate the securing force from the securing strap, through the weather cover, to the apex or crossbar of the A-frame.

According to another aspect of the present disclosure, there is provided a system for transporting goods, the system comprising: a vehicle (e.g., according to any of the preceding aspects); and a stillage (e.g., according to any of the preceding aspects).

According to another aspect of the present disclosure, there is provided a system for transporting goods, the system comprising: an HGV trailer (e.g., of any of the preceding aspects); and an A-frame (e.g., of any of the preceding aspects).

According to an aspect of the present disclosure, there is provided a method comprising: tensioning or de-tensioning a securing strap of a vehicle according to any preceding aspect.

According to another aspect of the present disclosure, there is provided a method of transporting goods, the method comprising: securing a good on a stillage according to any preceding aspect; loading the stillage on a vehicle according to any preceding aspect; and/or securing the stillage to the vehicle according to any preceding aspect.

According to another aspect of the present disclosure, there is provided a method of transporting goods such as quartz worktops, the method comprising: securing the goods to an A-frame of a preceding aspect; loading the A-frame on an HGV trailer of a preceding aspect; and securing the A-frame to the HGV trailer.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of Drawings

For a better understanding of the present invention, and to show more clearly how it may be carried into effect, reference will now be made, by way of example, to the accompanying drawings, in which:
Fig. 1 is a perspective view of an A-frame according to the present disclosure;
Fig. 2 is a side view of an HGV trailer according to the present disclosure;
Fig. 3 is a perspective view of the A-frame of Fig. 1 in a secured configuration on a deck of the trailer of Fig. 2;
Fig. 4 is a transverse section through a deck of the trailer of Fig. 2 showing two A-frames in a secured configuration; and
Fig. 5 is an example method according to the present disclosure.

### Detailed Description

In the description which follows, the goods being transported comprise worktops such as worktops used to form work surfaces in for example a domestic or commercial kitchen. This is done merely to simplify the description. However, it will be appreciated that although aspects of the invention have particular application to transporting planar goods such as worktops, glass panels, doors, windows, flat packed goods and the like, all aspects of the claimed invention can be applied to transporting any goods. For example, aspects of the invention could be adapted for transporting palletized goods.

### A-frame

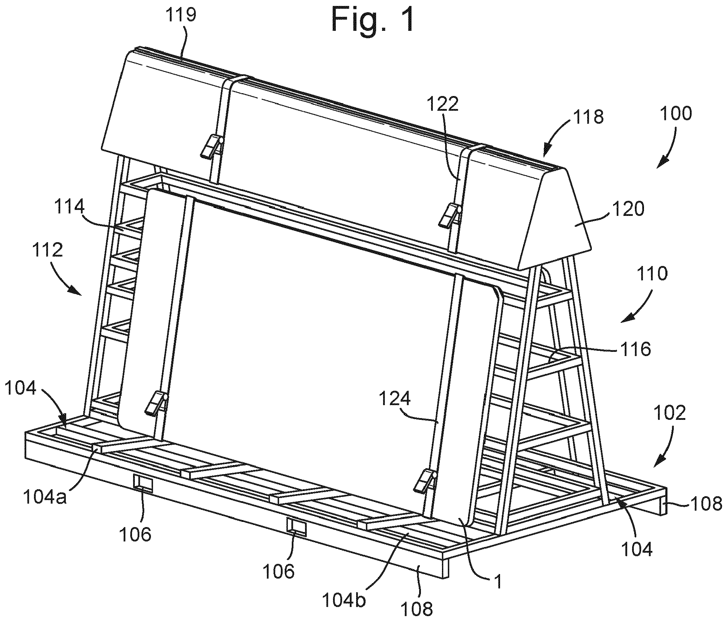

With reference to Fig. 1, an A-frame stillage 100 for holding and transporting a worktop 1 (e.g. a quartz worktop) is described. The A-frame 100 comprises a base 102 and an upstanding central portion 110 provided along a midline of the base 102.

The base 102 comprises a bed 104 which is configured to receive a worktop 1. The bed 104 is generally flat but preferably comprises a decline to the horizontal from each lateral edge.

The bed 104 comprises an open grid structure having a plurality of support struts upon which the worktop 1 may be received. On an upper level of the bed 104 is provided a plurality of support struts 104a running laterally from the centreline of the bed 104 to the lateral edge. On a lower level of the bed 104 is provided a plurality of longitudinal support struts 104b which run the length of the A-frame 100. Accordingly, the worktop 1 rests upon the lateral support struts 104a, but does not rest on the longitudinal support struts.

Upon each lateral support strut 104a of the grid structure is provided a guard strip (e.g. a plastic guard strip) which protects the worktop 1 from the steel of the grid structure and reduces the likelihood of (e.g. prevents) the worktop 1 from being scratched or otherwise damaged by the structure of the A-frame 100 itself (e.g., during transit). Securing or fastening straps 124 (e.g., ratchet straps) can be looped around and secured to the longitudinal support struts 104b of the base 102 in order to secure the worktop 1 to the A-frame 100.

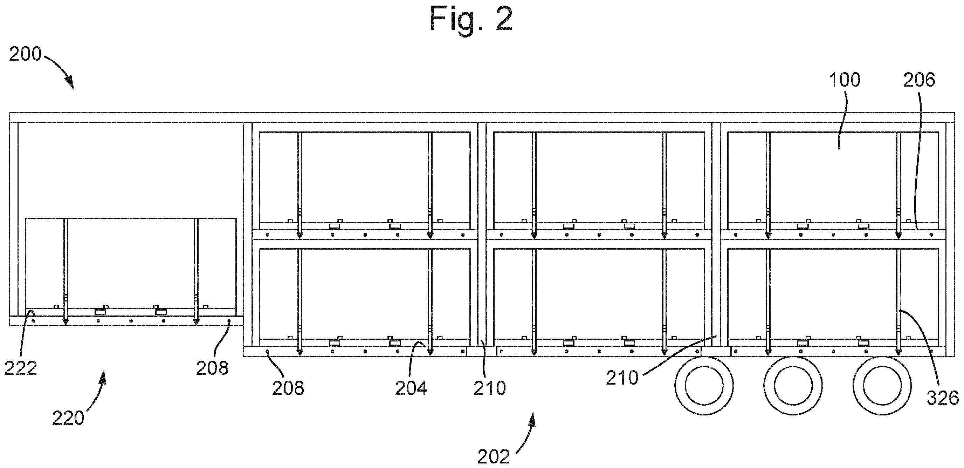

Along each outer lateral edge of the base 102 is provided a linear foot 108. The feet 108 are configured to support the A- frame 100 on a floor or a deck of a trailer 200 (as described in relation to Fig. 2). Each foot 108 comprises a pair of openings 106 for receiving the forks of a forklift such that the A-frame 100 can be lifted and otherwise manoeuvred.

The central portion 110 comprises a generally triangular prismatic shape having two major rectangular faces 112 which are inclined to the vertical. The central portion 110 thereby comprises a substantially A-shaped transverse cross section. The incline to the vertical of the major faces 112 may be similar (e.g., equal) to the decline to the horizontal of the bed 104 such that a right-angle may be formed between the bed 104 and each face 112. A worktop 1 having right-angular edges may thereby rest in a planar contact against the bed 104 and the face 112.

The central portion 110 comprises an open structure in a similar manner to the base 102. Each laterally-facing support strut 114 of the central portion 110 comprises a guard strip for protecting the worktop 1 from scratches or other damage during transit. The fastening straps 124 for securing the worktop 1 to the A-frame 100 may additionally loop around the support struts 114 of the upstanding portion 110.

Although in Fig. 1 only one worktop 1 is shown for simplicity, each face 112 of the A-frame 100 may be able to accommodate at least one worktop 1.

Within the open structure of the central portion 110 is provided a plurality of shelves 116 which may hold components related to the worktop 1, but too small to be transported on the bed 104. For example, worktop splashbacks may be carried on the shelves 116 of the central portion 110.

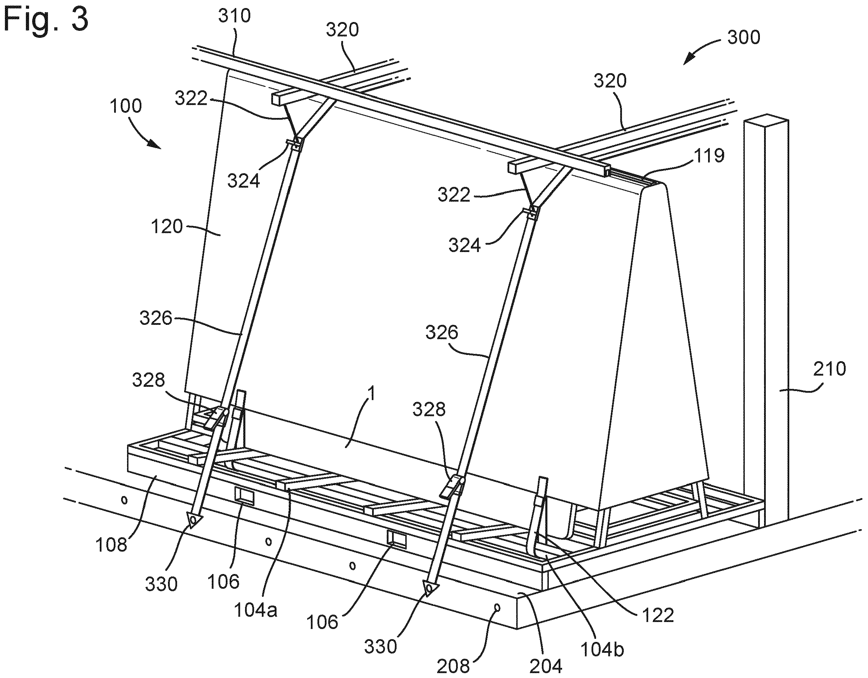

Attached to the apex 118 or crossbar of the A-frame 100 is a weather cover 120. The weather cover can be rolled up into an open position (e.g., as shown in Fig. 1) in order to provide access to a worktop held by the A-frame, and pulled down into a closed position (e.g., as shown in Fig. 3) in order to protect the payload of the A-frame 100 from the elements. The weather cover 120 may comprise fastening means 122 for securing the weather cover to the bed 104. In particular, as shown in Fig. 1 and 3, the weather cover 120 may comprise two permanently attached ratchet straps on each major surface which may permit the weather cover 120 to be temporarily secured in the open position (Fig. 1) to allow easy loading and unloading of the A-frame 100 (e.g. by securing ratchet straps 122 on opposing sides of the weather cover 120 together). Similarly, the ratchet straps 122 may be fastened around a respective longitudinal support strut 104b of the bed 104 to secure the weather cover 120 in the closed position (Fig. 3) and thereby prevent the weather cover from lifting during transit or manoeuvring of the A-frame 100.

The weather cover is attached to the apex 118 of the A-frame by means of a linear strip 119 which sits on top of the weather cover. The weather cover 120 is thereby sandwiched between the apex 118 of the A-frame and the linear strip 119 along the length of the apex 118. As will be described later, when in a secured configuration during transit, the strip 119 which attaches the weather cover 120 to the A-frame 100 is engaged by ratchet straps of the trailer 200. As such, the A-frame 100 is secured in transit over the weather cover 120.

The weather cover 120 may comprise a waterproof and durable material which is sufficiently flexible to be pulled up and down in order to allow access to and cover a worktop 1 held by the A-frame 100 (e.g., a PVC-coated polyester).

### HGV trailer

With reference to Fig. 2, an HGV trailer 200 for transporting A-frames 100 is described.

The example HGV trailer 200 of Fig. 2 is a 'curtain-sider' having curtains (not shown) on each lateral side of the trailer 200. The curtains can be opened and closed by drawing along the length of the trailer 200 in order to permit side access to the goods within the trailer 200 and to protect the goods therein from the elements. In the example trailer 200 shown in Fig. 2, each lateral side of the trailer 200 can accommodate up to seven A-frames 100. It will be understood by the skilled person that the far side of the trailer not shown is also able to accommodate up to seven A-frames 100 in a manner corresponding to the near side.

The trailer 200 comprises a main body 202 and a neck region 220 having a kingpin (not shown) for attaching to the fifth wheel of a semi-trailer truck or tractor. The neck region 220 is of reduced vertical height when compared with the main body 202.

The main body 202 comprises two decks 204, 206 which, when the curtains are open, can be loaded from either side of the trailer. In the main body 202, each deck 204, 206 is approximately 1.5m high such that an A-frame 100 can be placed on the trailer 200 with sufficient but not excessive clearance.

Each A-frame 100 can be lifted by a forklift to the height of the respective deck 204, 206 and placed on the deck, as shown in Figs. 2, 3 and 4.

In the neck region 220, the trailer 200 comprises a single raised deck 222 having increased vertical clearance or headspace above the deck 222. The neck region 220 may thereby be able to accommodate A-frames with a greater height dimension and/or payloads of greater dimension.

Along the sill or edge of each of the lower deck 204 and the raised deck 222 is provided an array of fixing points 208 which may be used as anchoring points for ratchet straps for fastening the A-frames to the decks 204, 206, 222. In a preferred example, the upper deck 206 may not comprise an array of fixing points 208, such the ratchet straps for the upper deck 206 may be anchored to fixing points 208 along the sill of the lower deck 204. All ratchet straps may thereby be fastened by a user standing at the side of the trailer 200, without needing to climb the structure. Alternatively, the upper deck 206 may comprise an array of fixing points 208 as shown in Fig. 2. The fastening arrangements will be described in detail below.

### HGV trailer securing system

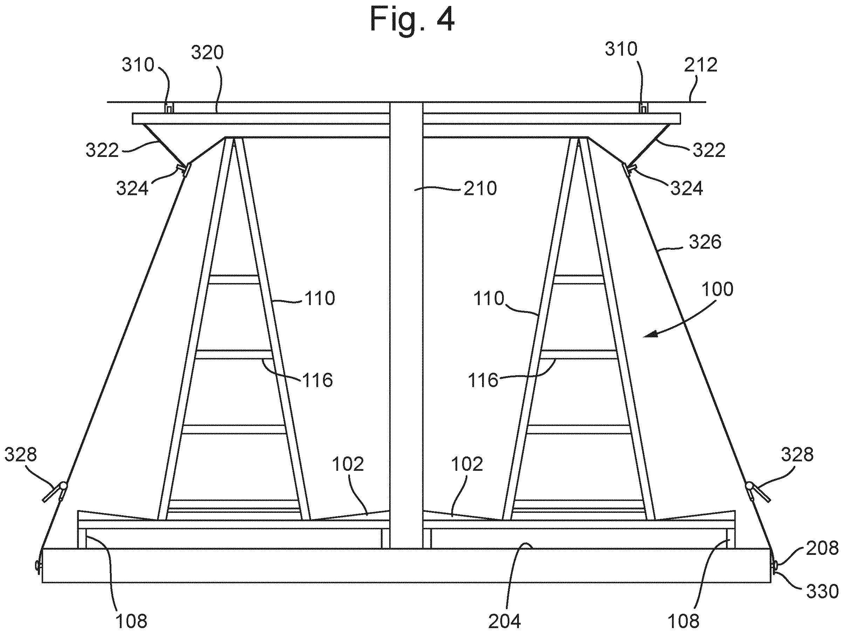

As shown in Figs. 3 and 4, the trailer 200 comprises a complex system 300 for securing the A-frames 100 in position for transit. Fig. 3 is a perspective view of an A-frame 100 in a secured configuration on a deck 204 of the trailer 200. Fig. 4 is an end-on view along the length of the trailer 200 of one deck 204 showing two A-frames 100 in the secured configuration of Fig. 3. For simplicity, the weather cover 120 and the worktop 1 are not shown in Fig. 4. Further, in respect of Fig. 3, only one A-frame 100 and only one rail 310 is shown, and the ceiling 212 (Fig. 4) of the lower deck 204 has been omitted.

The securing system 300 comprises a pair of parallel rails 310 provided longitudinally within the trailer 200. The rails 310 are attached to the underside of the ceiling 212 of the lower deck 204 (e.g. the underside of the upper deck 206) and attached to the roof of the trailer 200 for the upper deck 206. The rails 310 are provided towards the lateral edges of the trailer 200, such that the spacing between the rails is substantially equal to (e.g., marginally narrower than) the width of two A-frames 100 provided side-by-side, as shown in Fig. 4.

At regularly spaced locations along the midline of the deck 204, support pillars 210 support the upper deck 206. For example, the support pillars may be spaced apart by approximately the length of an A-frame 100. Similarly, the upper deck 206 may comprise a series of support pillars for supporting the roof of the trailer and/or the rails described subsequently.

The rails 310 may be either substantially continuous along the length of the trailer 200, or may be divided into longitudinal sections as dictated by the spaces between consecutive support pillars 210.

Slidably attached to the pair of rails 310 are rigid guide tubes 320. Each guide tube 320 is approximately the same length as (e.g. marginally shorter than) the width of two A-frames 100 provided side-by-side, but greater in length than the spacing between the two rails 310.

Each guide tube 320 is slidable along the rails 310 (i.e. along the length direction of the trailer 200) to the extent that it is permitted by the support pillars 210. For example, to the extent that the rails 310 are greater in length than the separation between adjacent support pillars, the support pillars 210 may restrict the travel span of the guide tube 320.

The guide tube 320 houses a bungee cord 322 which, in an assembled configuration as shown in Figs. 3 and 4 (e.g., under tension), is greater in length than the guide tube 320 such that it extends from either end (or openings close to either end) of the guide tube 320.

At either distal end of the bungee cord 322 is provided a clip 324 for attaching the bungee cord to ratchet straps 326 which fasten the A-frames 100 to fixing points 208 using buckles 330. The clip 324 may be frangible, such that it is configured to break when a predetermined force is exerted upon it. For example, the clip may be configured to break prior to a failure point of either the guide tube 320, the rails 310, or the fixings of the rails 310 to the ceiling 212 or roof.

The clips 324 attach the ends of the bungee cord 322 to the ratchet strap 326 which, in a secured configuration, is anchored at either end to fixing points 208 via buckles 330 and tightened so as to exert a securing force on the apex 118 of each A-frame 100. The A-frames 100 are thereby secured in position side-by-side. In particular, the ratchet strap 326 exerts a securing force to the strip 119 running along the length of the apex 118 and provided on top of the weather cover 120. Accordingly, the A-frames are secured in place over the weather cover 120, such that the weather cover 120 need not be readjusted or removed in order to secure the A-frames 100.

The clips 324 are configured to receive the ratchet straps 326 in a slidable manner, such that as each ratchet strap 326 is tensioned or de-tensioned, the ratchet strap 326 may slide therethrough. Accordingly, the ratchet strap 326 may comprise only one ratchet fixing 328 on one side, and the slidable connection between clips 324 and the ratchet strap 326 allows the tension to be distributed.

As shown in Fig. 4, the tension applied by the bungee cord 322 to the ratchet strap 326 in the secured configuration may be sufficient to cause a discontinuity in gradient of the ratchet strap 326 at the location of the clip 324. The bungee cord 322 may thereby hold the ratchet strap 326 away from the faces 110 of the A-frame 100, such that the ratchet strap 326 may not contact a worktop 1 being held by the A-frame 100 during transit and manoeuvring.

As shown in Fig. 3, for each length of rail 310 corresponding to the length of an A-frame 100, at least two guide tubes 320 and corresponding bungee cords 322 and ratchet straps 326 are provided. The A-frame 100 may thereby be secured to the deck 204 in two places, approximately one quarter of the way in from each end of the A-frame 100.

In effect, the worktops 1 are secured to the A-frames 100, and the A-frames are then secured to the deck 204, 206. If only one A-frame 100 is provided, then the ratchet strap passes over the single A-frame 100 but the bungee cord 322 still provides tension to the ratchet strap 326 at two points.

In the neck region 220 of the trailer 200, the rails 310, guide tubes 320, and bungee cords 322 used to secure the A-frames 100 to the deck are attached to the roof of the trailer. In effect, the neck region 220 uses the rails 310 and guide tubes 320 at the same height as the top deck 206, such that there may be a greater clearance between the rails 310 and the securing strip 119 of the A-frame 100 than for the decks 204, 206. For example, the raised deck 222 may have a headspace of approximately 2.8 metres. In the neck region 220, the ratchet straps are attached to the fixing points 208 on the sill of the raised deck 222. Items of greater dimension may thereby be transported in the neck region 220.

### Releasing a payload

In use, when a user is presented with an A-frame 100 in the secured configuration of Fig. 3, the A-frame 100 can be released as follows. The ratchet mechanism 328 of each ratchet strap 326 can be released, and the tension exerted by the bungee cord 322 will pull the ratchet strap upwards and away from the A-frame, towards the ends of the guide tube 320. The ratchet straps 326 can then be released from the anchor points 208 on either sill of the deck. Between the ends of the guide tube 310, the ratchet strap 326 will be held substantially parallel with the deck 204, i.e., away from the A-frame 100. The weight of the anchor fixing on each end of the ratchet straps 326 will make the ratchet straps hang substantially vertically from either end of the respective guide tube 310.

With the ratchet straps 326 now released and hanging freely, they can be pulled longitudinally along the rail 310 and beyond an end of the A-frame 100 (e.g. to the same end or to opposite ends), such that the ratchet straps 326 do not obstruct a forklift or the manoeuvring of the A-frame 100 laterally off the deck 204, 206. It will be understood by the skilled person that sliding the ratchet straps 326 to the end of the A-frame 100 on one side of the trailer 200 will pull the same ratchet straps out of the way on the other lateral side of the trailer 200 to also allow lateral unloading of the trailer 200 from the opposite side.

The worktop 1 and weather cover 120 remain secured to the A-frame during the unloading of the A-frame 100 from the trailer 200. Once removed from the trailer 200 (e.g., once placed indoors), the weather cover 120 can be opened and the worktop 1 removed from the A-frame 100.

### Securing a Payload

As previously described, the weather cover 120 can be secured in a closed position shortly after the worktops 1 are loaded on to and secured to the A-frame 100, such that the weather cover 120 need not be adjusted thereafter. This can be performed indoors (e.g., in a warehouse), prior to the loading of the A-frames on to the trailer 200.

A user can slide the guide tubes 320 and ratchet straps 326 along the rails 310 until they are out of the way and do not obstruct the portion of the deck 204, 206, 222 where an A-frame 100 will be loaded.

An A-frame 100 is then loaded laterally on to the deck 204, 206, 222 by a forklift. Similarly, a second A-frame 100 can be loaded laterally on to the opposing portion of the deck 204, 206, 222 from the opposite side of the trailer 200. The ratchet straps 326 and guide tubes 320 are then slid along the rails 310 until they are suitably located with respect to the A-frame 100 (e.g. one third or one quarter of the distance from each end), and the ratchet straps 326 attached to the anchor points 208 on either sill of the deck 204, 206, 222.

At this point, the ratchet straps are anchored to the deck 204, 206, 222 but the tension of the bungee cord 322 draws the ratchet strap upwards, away from the A-frame 100 and towards the ends of the guide tube 310. So far in the securing process, the ratchet straps have not contacted the A-frame (e.g. at least in part due to the bungee cords 322).

The ratchet straps are then gradually tensioned using the ratcheting mechanism 328. The ratchet straps gradually approach the apexes 118 of the A-frames 100, and the ratchet straps are tensioned further until a desired securing force is exerted on apexes 118 via securing strips 119. The ratchet mechanism can then be locked in place and the loading of other A-frames undertaken, or the closing of the curtain-sides.

### Advantages

Ordinarily, in order to secure an item which is greater than the arm-span or height of an individual, the individual might throw the ratchet strap over the item, the ratchet strap and end buckle then landing on the other side of the item. However, this can cause the strap and/or buckle to impact the item, which in the case of worktops may cause damage. The present invention allows the ratchet strap to be gradually lowered into contact with the A-frame, only at the location where a securing force is required.

During inclement weather conditions, it can be difficult to transfer a worktop from factory to a destination (e.g. customer's kitchen) without exposing the worktop to the weather (e.g. rain, sleet or snow). The A-frame and system of the present disclosure allow a worktop to be covered in the factory and then transferred to a trailer without exposing the worktop to the weather. For example, the worktop remains under the weather cover even during the securing of the A-frame within the trailer.

Further, the weather cover 120 need not be adjusted or removed in order to load or secure the A-frame 100 on to the trailer, as the A-frame 100 is secured over the weather cover 120.

During a transit incident, e.g. a heavy braking incident or a crash, the ratchet straps securely hold the A-frames 100 on the deck. However, during such an incident, the large forces communicated from the ratchet strap to the bungee cord may exceed the forces which the guide tube, the rails, the connection therebetween, or the connection of the rails to the roof, may be capable of withstanding. The present inventors have determined that, rather than directly attaching the bungee cord to the ratchet strap, and risk the above large forces causing the complex securing system to be brought down or otherwise broken, and rather than directly attaching the ratchet strap to the guide tubes or rails, it is preferable to use a clip that breaks in preference to the complex securing system. As the bungee cord, guide tubes 320 and rails 310 are not essential to hold the A-frames 100 securely on the deck, there is no safety implication of this choice. As such, after a transit incident, only the frangible clips would need to be replaced rather than the whole complex rigging system.

### Method

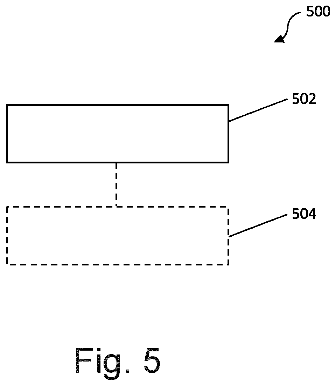

With reference to Fig. 5, an example method 500 is described. The method 500 comprises 502 tensioning or de-tensioning a securing strap 326 of the trailer 200. The method may additionally comprise 504 securing a worktop 1 to an A-frame 100; and/or 504 loading an A-frame 100 onto the trailer 200.

Additional statements of invention are set out below:
Statement 1. An HGV trailer for transporting goods (for example worktops), the trailer comprising:
   a deck configured to receive an A-frame for holding the goods;
   a securing strap for securing the A-frame to the deck; and
   a biasing element attached to the securing strap and configured to bias the securing strap away from the deck.
Statement 2. The HGV trailer of statement 1, wherein the biasing element is provided above the deck.
Statement 3. The HGV trailer of statements 1 or 2, wherein the HGV trailer comprises a rail provided longitudinally above the deck, the biasing element being slidably attached to the rail such that the securing strap is slidable along the deck.
Statement 4. The HGV trailer of any preceding statement, wherein the biasing element is attached to the securing strap by means of a frangible clip.
Statement 5. The HGV trailer of any preceding statement, wherein the securing strap is freely slidable through the frangible clip such that the point of attachment to the biasing element is movable as the securing strap is tensioned.
Statement 6. The HGV trailer of any preceding statement, wherein the biasing element comprises a continuous biasing element, or two biasing elements attached to the securing strap in two locations above the deck towards either lateral side of the trailer.
Statement 7. The HGV trailer of any preceding statement, wherein the HGV trailer comprises a parallel pair of rails provided longitudinally and provided in parallel with the deck, the securing strap being attached to the pair of rails by the continuous biasing element or the two biasing elements, such that the securing strap is slidable along the rails.
Statement 8. The HGV trailer of statement 7, wherein the HGV trailer comprises a continuous biasing element attaching the securing strap to both rails, or wherein the HGV trailer comprises two biasing elements, each attaching the securing strap to a respective rail.
Statement 9. The HGV trailer of any of statements 7 or 8, wherein the HGV trailer comprises a guide tube slidably attached to both rails, the continuous biasing element provided within the guide tube and extending from substantially the ends of the guide tube, such that each end of the biasing element is attached to the securing strap by a frangible clip at a different location.
Statement 10. The HGV trailer of any of statements 3 to 9, wherein at least one biasing element is attached to each rail.
Statement 11. The HGV trailer of any preceding statement, wherein the securing strap is operable between an unsecured configuration and a secured configuration in which the securing strap is configured to secure an A-frame to the deck.
Statement 12. The HGV trailer of any preceding statement, wherein the biasing element comprises a tensioning member configured to apply a tension to the securing strap in the secured configuration.
Statement 13. The HGV trailer of any preceding statement, wherein the tensioning member comprises an elastic element, most preferably a bungee cord.
Statement 14. The HGV trailer of any preceding statement, wherein in a secured configuration, the biasing element forms a discontinuity in a gradient of the securing strap.
Statement 15. The HGV trailer of any preceding statement, wherein the trailer comprises:
   a lower deck and an upper deck, each of the two decks having a rail or a pair of rails; and/or
   a neck region having a raised deck, the neck region having a rail or a pair of rails provided along the roof of the trailer.
Statement 16. The HGV trailer of statement 15, wherein the rails of the upper deck are provided from a roof of the trailer, and/or wherein the rails of the raised deck are provided from a roof of the trailer.
Statement 17. The HGV trailer of any of statements 15 or 16, wherein the lower deck comprises a sill having an array of attachment points, the securing straps of the upper deck being attached to the attachment points of the sill of the lower deck.
Statement 18. The HGV trailer of any preceding statement, wherein in a secured configuration, the biasing element is configured to bias the securing strap away from a midline of the trailer.
Statement 19. An A-frame for transporting goods on an HGV trailer, comprising
   a receiving portion for receiving the goods;
   an apex; and
   a weather cover for covering the goods received by the receiving portion, wherein the weather cover is provided over the apex of the A-frame, such that in a secured configuration on a trailer, the A-frame is configured to be secured over the weather cover.
Statement 20. The A-frame of statement 19, wherein the A-frame comprises a bed for receiving the goods, the bed comprising a series of laterally extending support struts and a longitudinally extending support strut, the laterally extending support struts being located above the longitudinally extending support strut such that the laterally extending support struts are configured to bear the weight of the goods.
Statement 21. The A-frame of statements 19 or 20, wherein the weather cover comprises a securing strap for securing the weather cover in a closed position, wherein in the closed position, the securing strap is secured to a longitudinally extending support strut.
Statement 22. The A-frame of any of statements 19 to 21, wherein the weather cover comprises a securing strap on either major face for securing the weather cover in an open position, wherein in an open position, each securing strap is secured to a securing strap provided on the opposing major face.
Statement 23. The A-frame of any of statements 19 to 22, wherein the A-frame comprises an upstanding portion having an open structure, the goods being securable to the A-frame using a securing strap looped through the open structure.
Statement 24. A system for transporting worktops, the system comprising:
   the HGV trailer of any of statements 1 to 18; and
   the A-frame of any of statements 19 to 23.
Statement 25. A method comprising:
   tensioning or de-tensioning a securing strap of the trailer of any of statements 1 to 19.

It will be appreciated by those skilled in the art that although the invention has been described by way of example, with reference to one or more examples, it is not limited to the disclosed examples and that alternative examples could be constructed without departing from the scope of the invention as defined by the appended claims.

## Claims

1. An HGV trailer for transporting goods, the trailer comprising:
a deck configured to receive an A-frame for holding the goods;
a securing strap for securing the A-frame to the deck; and
a biasing element attached to the securing strap and configured to bias the securing strap away from the deck.

2. The HGV trailer of claim 1, wherein the biasing element is provided above the deck.

3. The HGV trailer of claims 1 or 2, wherein the HGV trailer comprises a rail provided longitudinally above the deck, the biasing element being slidably attached to the rail such that the securing strap is slidable along the deck.

4. The HGV trailer of any preceding claim, wherein the biasing element is attached to the securing strap by means of a frangible clip.

5. The HGV trailer of any preceding claim, wherein the securing strap is freely slidable through the frangible clip such that the point of attachment to the biasing element is movable as the securing strap is tensioned.

6. The HGV trailer of any preceding claim, wherein the biasing element comprises a continuous biasing element, or two biasing elements attached to the securing strap in two locations above the deck towards either lateral side of the trailer.

7. The HGV trailer of any preceding claim, wherein the HGV trailer comprises a parallel pair of rails provided longitudinally and provided in parallel with the deck, the securing strap being attached to the pair of rails by the continuous biasing element or the two biasing elements, such that the securing strap is slidable along the rails.

8. The HGV trailer of claim 7, wherein the HGV trailer comprises a continuous biasing element attaching the securing strap to both rails, or wherein the HGV trailer comprises two biasing elements, each attaching the securing strap to a respective rail.

9. The HGV trailer of any of claims 7 or 8, wherein the HGV trailer comprises a guide tube slidably attached to both rails, the continuous biasing element provided within the guide tube and extending from substantially the ends of the guide tube, such that each end of the biasing element is attached to the securing strap by a frangible clip at a different location.

10. The HGV trailer of any of claims 3 to 9, wherein at least one biasing element is attached to each rail.

11. The HGV trailer of any preceding claim, wherein the securing strap is operable between an unsecured configuration and a secured configuration in which the securing strap is configured to secure an A-frame to the deck.

12. The HGV trailer of any preceding claim, wherein the biasing element comprises a tensioning member configured to apply a tension to the securing strap in the secured configuration.

13. The HGV trailer of any preceding claim, wherein the tensioning member comprises an elastic element, most preferably a bungee cord.

14. The HGV trailer of any preceding claim, wherein in a secured configuration, the biasing element forms a discontinuity in a gradient of the securing strap.

15. The HGV trailer of any preceding claim, wherein the trailer comprises:
a lower deck and an upper deck, each of the two decks having a rail or a pair of rails; and/or
a neck region having a raised deck, the neck region having a rail or a pair of rails provided along the roof of the trailer.

16. The HGV trailer of claim 15, wherein the rails of the upper deck are provided from a roof of the trailer, and/or wherein the rails of the raised deck are provided from a roof of the trailer.

17. The HGV trailer of any of claims 15 or 16, wherein the lower deck comprises a sill having an array of attachment points, the securing straps of the upper deck being attached to the attachment points of the sill of the lower deck.

18. The HGV trailer of any preceding claim, wherein in a secured configuration, the biasing element is configured to bias the securing strap away from a midline of the trailer.

19. A method comprising:
tensioning or de-tensioning a securing strap of the trailer of any of claims 1 to 18.
